(19) Europäisches Patentamt
European Patent Office
Office européen des brevets

(11) Veröffentlichungsnummer: **0 072 482**
**A2**

(12) # EUROPÄISCHE PATENTANMELDUNG

(21) Anmeldenummer: **82106955.6**

(22) Anmeldetag: **02.08.82**

(51) Int. Cl.[3]: **C 07 F 9/09**
C 07 F 9/165, C 07 F 9/40
C 07 F 9/24, A 01 N 57/10
A 01 N 57/18, A 01 N 57/26

(30) Priorität: **13.08.81 DE 3131980**
**07.06.82 DE 3221479**

(43) Veröffentlichungstag der Anmeldung:
**23.02.83 Patentblatt 83/8**

(84) Benannte Vertragsstaaten:
**AT BE CH DE FR GB IT LI NL**

(71) Anmelder: **BAYER AG**
**Zentralbereich Patente, Marken und Lizenzen**
**D-5090 Leverkusen 1, Bayerwerk(DE)**

(72) Erfinder: **Krüger, Bernd-Wieland, Dr.**
**Sillerstrasse 49**
**D-5600 Wuppertal 1(DE)**

(72) Erfinder: **Behrenz, Wolfgang, Dr.**
**Untergruendemich 14**
**D-5063 Overath(DE)**

(54) **Neue (Thiono) (Dithio) -Phosphor- (phosphon) -säureester, Verfahren zu ihrer Herstellung und ihre Verwendung in Schädlingsbekämpfungsmitteln.**

(57) Die vorliegende Erfindung betrifft neue (Thiono) (Dithio)-Phosphor-(phosphon)-säuredicyanhydrinester der Formel I

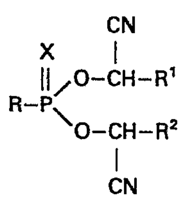

(I)

in welcher

X für Sauerstoff oder Schwefel steht,

R für einen gegebenenfalls substituierten Rest aus der Reihe Alkyl, Alkenyl, Alkinyl, Aryl, Aralkyl, Alkoxy, Aryloxy, Aralkoxy, Alkylthio, Arylthio, Aralkylthio, Alkylamino (Mono- und Dialkylamino), Arylamino oder Aralkylamino steht und

$R^1$ und $R^2$ gleich oder verschieden sind und einzeln für Wasserstoff oder für gegebenenfalls substituierte Reste aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest steht,

welche als Synergisten in Schädlingsbekämpfungsmitteln verwendet werden können, welche zusätzlich gegen Arthropoden, vorzugsweise gegen Insekten und Spinnentiere, insbesondere gegen Insekten wirksame Stoffe enthalten.

BAYER AKTIENGESELLSCHAFT 5090 Leverkusen, Bayerwerk

Zentralbereich
Patente, Marken und Lizenzen S/by-c
I/III

Neue (Thiono)(Dithio)-Phosphor-(phosphon)-säureester, Verfahren zu ihrer Herstellung und ihre Verwendung in Schädlingsbekämpfungsmitteln

Die vorliegende Erfindung betrifft neue (Thiono)(Dithio)-Phosphor-(phosphon)-säuredicyanhydrinester, Verfahren zu ihrer Herstellung sowie ihre Verwendung in Schädlingsbekämpfungsmitteln, vorzugsweise zur Bekämpfung von Arthropoden, insbesondere von Insekten, Milben und Spinnentieren.

Synergistische Mischungen von insektiziden Wirkstoffen, z.B. von Pyrethroiden mit bestimmten Methylendioxyphenyl-Derivaten, z.B. Piperonylbutoxid als Synergisten sind bereits bekannt geworden (vgl. z.B. K. Naumann, Chemie der Pflanzenschutz- und Schädlingsbekämpfungsmittel, Springer Verlag Berlin, Band 7 (1981), Seiten 3-6). In der Praxis ist die Wirksamkeit solcher Präparate jedoch nicht immer voll befriedigend.

Es wurde gefunden, daß die neuen (Thiono)(Dithio)-Phosphor-(phosphon)-säuredicyanhydrinester der Formel I

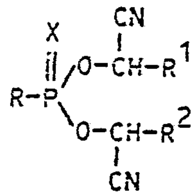

(I)

in welcher

X für Sauerstoff oder Schwefel steht,

R für einen gegebenenfalls substituierten Rest aus der Reihe Alkyl, Alkenyl, Alkinyl, Aryl, Aralkyl, Alkoxy, Aryloxy, Aralkoxy, Alkylthio, Arylthio, Aralkylthio, Alkylamino (Mono- und Dialkylamino), Arylamino oder Aralkylamino steht und

$R^1$ und $R^2$ gleich oder verschieden sind und einzeln für Wasserstoff oder für gegebenenfalls substituierte Reste aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest stehen,

als Synergisten in Schädlingsbekämpfungsmitteln verwendet werden können, welche zusätzlich gegen Arthropoden, vorzugsweise gegen Insekten und Spinnentiere, insbesondere gegen Insekten wirksame Stoffe enthalten.

Als gegen Arthropoden wirksame Stoffe kommen praktisch alle üblichen Wirkstoffe in Frage (vgl. z.B. K.H. Büchel, Pflanzenschutz und Schädlungsbekämpfungsmittel, Thieme

Verlag Stuttgart, 1977, und Farm Chemicals Handbook 1979, Meister Publishing Co, Willougby, 1979).

Weiterhin wurde gefunden, daß man die neuen (Thiono)-(Dithio)-Phosphor-(phosphon)-säuredicyanhydrinester der Formel (I) erhält, wenn man

a) (Thiono)(Dithio)-Phosphor-(phosphon)-säurecyanhydrinesterchloride der Formel II

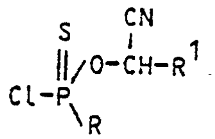

(II)

in welcher

R und $R^1$ die oben angegebene Bedeutung haben,

mit Aldehyden der Formel III

$$R^2\text{-CHO} \qquad \text{(III)}$$

in welcher

$R^2$ die oben angegebene Bedeutung hat,

in Gegenwart angenähert äquimolarer Mengen wasserlöslicher Cyanide, in Gegenwart eines Katalysators, in Gegenwart von Wasser und mit Wasser praktisch nicht mischbarer Verdünnungsmittel bei Temperaturen zwischen etwa 0 und 80°C umsetzt, oder

b) Thio-Phosphor-(phosphon)-säuredichloride der Formel IV

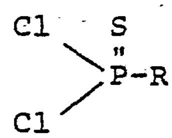

(IV)

in welcher

R die oben angegebene Bedeutung hat,

entweder mit Aldehyden der Formel V

$$R^1CHO \qquad (V)$$

in welcher

$R^1$ die oben angegebene Bedeutung hat,

oder mit Aldehyden der Formel III

$$R^2CHO \qquad (III)$$

in welcher

$R^2$ die oben angegebene Bedeutung hat,

in Gegenwart von wasserlöslichen Cyaniden, in Gegenwart eines Katalysators, in Gegenwart von Wasser und mit Wasser praktisch nicht mischbarer Lösungsmittel bei Temperaturen zwischen etwa 0 und 80°C umsetzt oder

c) Phosphon-(phosphor)-säuredichloride der Formel VI

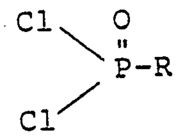

(VI)

in welcher

R die oben angegebene Bedeutung hat,

mit substituierten Acetonitrilen der Formel VII

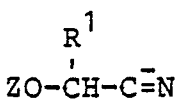

(VII)

in welcher

$R^1$ die oben angegebene Bedeutung hat, und

Z für Wasserstoff oder ein Alkalimetallion steht,

- oder mit substituierten Acetonitrilen der Formel VIII

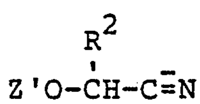

(VIII)

in welcher

$R^2$ die oben angegebene Bedeutung hat, und

Z' für Wasserstoff oder ein Alkalimetallion steht,

gegebenenfalls in Gegenwart von Säureakzeptoren, gegebenenfalls in Gegenwart von Verdünnungsmitteln bei Temperaturen zwischen -80°C und +80°C umsetzt.

Als gegebenenfalls substituiertes Alkyl R, $R^1$ und $R^2$ steht geradkettiges oder verzweigtes Alkyl mit 1 bis 20, vorzugsweise 1 bis 10, insbesondere 1 bis 5 Kohlenstoffatomen. Beispielhaft seien gegebenenfalls substituiertes Methyl, Ethyl, n- und iso-Propyl, n-, iso- und tert.-Butyl, genannt.

Als gegebenenfalls substituiertes Alkenyl R, $R^1$ und $R^2$ steht geradkettiges oder verzweigtes Alkenyl mit vorzugsweise 2 bis 5, insbesondere 2 bis 4 Kohlenstoffatomen. Beispielhaft seien gegebenenfalls substituiertes Ethenyl, Propenyl-(1), Propenyl-(2) und Butenyl-(3) genannt.

Als gegebenenfalls substituiertes Alkinyl R, $R^1$ und $R^2$ steht geradkettiges oder verzweigtes Alkinyl mit vorzugsweise 2 bis 5, insbesondere 2 bis 4 Kohlenstoffatomen. Beispielsweise seien gegebenenfalls substituiertes Ethinyl, Propinyl-(1), Propinyl-(2) und Butinyl-(3) genannt.

Als gegebenenfalls substituiertes Cycloalkyl $R^1$ und $R^2$ steht mono-, bi- und tricyclisches Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl, Cycloheptyl, Bicyclo[2,2,1]-heptyl, Bicyclo[2,2,2]octyl und Adamantyl genannt.

Als gegebenenfalls substituiertes Cycloalkenyl $R^1$ und $R^2$ steht vorzugsweise monocyclisches Cycloalkenyl mit 5 oder 6 Kohlenstoffatomen und 1 oder 2 Doppelbindungen.

Als gegebenenfalls substituiertes Alkoxy R steht geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n- und iso-Propoxy und n-, iso- und tert.-Butoxy genannt.

Als gegebenenfalls substituiertes Alkylthio R steht geradkettiges oder verzweigtes Alkylthio mit vorzugsweise 1 bis 6, insbesondere 1 bis 4 Kohlenstoffatomen. Beispielhaft seien gegebenenfalls substituiertes Methylthio, Ethylthio, n- und iso-Propylthio, n-, iso- und tert.-Butylthio genannt.

Als gegebenenfalls substituiertes Aryl R, $R^1$ und $R^2$ steht Aryl mit vorzugsweise 6 bis 10 Kohlenstoffatomen im Arylteil. Beispielhaft seien gegebenenfalls substituiertes Phenyl oder Naphthyl, insbesondere Phenyl genannt.

Als gegebenenfalls substituiertes Aralkyl R, $R^1$ und $R^2$ steht gegebenenfalls im Arylteil und/oder Alkylteil substituiertes Aralkyl mit vorzugsweise 6 oder 10, insbesondere 6 Kohlenstoffatomen im Arylteil und vorzugsweise 1 bis 4, insbesondere 1 oder 2 Kohlenstoffatomen in Alkylteil, wobei der Alkylteil geragkettig oder verzweigt sein kann. Beispielhaft seien gegebenenfalls substituiertes Benzyl und Phenylethyl genannt.

Gegebenenfalls substituiertes Aralkenyl $R^1$ und $R^2$ entspricht in seinem Arylteil dem Aralkylrest $R^1$ bzw. $R^2$. Es enthält im Alkenylteil vorzugsweise 2 bis 6, insbesondere 2 oder 3 Kohlenstoffatome und 1 oder 2, vorzugsweise 1 Doppelbindung.

Gegebenenfalls substituiertes Aryloxy, Arylthio und Arylamino R enthalten vorzugsweise 6 oder 10 Kohlenstoffatome im Arylteil, wobei Phenyloxy, Naphthyloxy, Phenylthio und Naphthylthio, Phenylamino und Naphthylamino, vorzugsweise Phenoxy, Phenylthio und Phenylamino genannt seien.

Gegebenenfalls substituiertes Aralkoxy, Aralkylthio und Aralkylamino R enthalten im Arylteil vorzugsweise 5 oder 10 Kohlenstoffatome, wobei Phenyl als besonders bevorzugt genannt sei. Der Alkylteil ist verzweigt oder geradkettig und enthält vorzugsweise 1 bis 4, insbesondere 1 oder 2 Kohlenstoffatome. Besonders bevorzugt ist als Aralkylteil der Benzylrest.

Im gegebenenfalls substituierten Alkylamino R enthält die Aminogruppe 1 oder 2 Alkylgruppen, welche jeweils geradkettig oder verzweigt sein können und vorzugsweise 1 bis 5, insbesondere 1 bis 3 Kohlenstoffatome enthalten, wobei Methyl, Ethyl, n- und iso-Propyl genannt seien. Beispielhaft seien Monomethylamino und Dimethylamino aufgeführt.

Als gegebenenfalls substituierte heterocyclische Reste $R^1$ und $R^2$ stehen heteroparaffinische, heteroaromatische und heteroolefinische 5- bis 7-gliedrige, vorzugsweise 5- oder 6-gliedrige Ringe mit vorzugsweise 1 bis 3, insbesondere 1 oder 2 gleichen oder verschiedenen Heteroatomen. Als Heteroatome stehen Sauerstoff, Schwefel oder Stickstoff. Als Beispiele seien gegebenenfalls substituierte Pyrrolidinyl, Piperidinyl, Furyl, Thiophenyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Azepinyl, Pyrrolyl, Pyridyl, Piperazinyl, Pyridazinyl, Pyrimidinyl, Pyrazinyl, 1,3,5-, 1,2,4- und 1,2,3-Triazinyl, 1,2,4-, 1,3,2-, 1,3,6- und 1,2,6-Oxazinyl, Oxepinyl, Thiepinyl und 1,2,4-Diazepinyl genannt.

Die in der Definition von R, $R^1$ und $R^2$ genannten substituierten Reste können einen oder mehrere, vorzugsweise 1 bis 3, insbesondere 1 oder 2 gleiche oder verschiedene Substituenten tragen. Als Substituenten seien beispielhaft aufgeführt: Alkyl mit vorzugsweise 1 bis 4, insbesondere 1 oder 2 Kohlenstoffatome, wie Methyl, Ethyl, n- und iso-Propyl und n-, iso- und tert-Butyl; Alkoxy mit vorzugsweise 1 bis 4, insbesondere 1 oder 2 Kohlenstoffatomen, wie Methoxy, Ethoxy, n- und iso-Propyloxy und n-, iso- und tert-Butyloxy; Alkylthio mit vorzugsweise 1 bis 4, insbesondere 1 oder 2 Kohlenstoffatomen, wie Methylthio, Ethylthio, n- und iso-Propylthio und n-, iso- und tert-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Halogen, vorzugsweise Fluor, Chlor, Brom und Jod, insbesondere Chlor und Brom; Cyano; Nitro; Alkoxycarbonyl mit vorzugsweise 2 bis 4, insbesondere 2 oder 3 Kohlenstoffatomen, wie Methoxycarbonyl und Ethoxycarbonyl und Phenoxybenzyloxycarbonyl. Im Falle von Arylteilen enthaltenden Resten können die Arylteile, z.B. die Phenylringe durch Alkylendioxygruppen substituiert sein, welche vorzugsweise 1 bis 3, insbesondere 1 oder 2 Kohlenstoffatome enthalten und durch 1 bis 4 gleiche oder verschiedene Halogenatome (Fluor, Chlor, Brom und Jod) substituiert sein können.

Halogen bedeutet bei der Definition der Reste der Verbindungen der Formeln I bis XIa jeweils (wo nicht anders erläutert) Fluor, Chlor, Brom und Jod, vorzugsweise Fluor, Chlor und Brom.

Bevorzugt sind Verbindungen der Formel (I), in welcher

X für Sauerstoff oder Schwefel steht,

R für einen gegebenenfalls durch Halogen substituierten Rest aus der Reihe $C_1$-$C_5$-Alkyl, $C_2$-$C_5$-Alkenyl, $C_2$-$C_5$-Alkinyl, Phenyl, Benzyl, $C_1$-$C_5$-Alkoxy, Phenoxy, Benzyloxy, $C_1$-$C_5$-Alkylthio, Phenylthio, Benzylthio, $C_1$-$C_5$-Alkylamino (Mono- und Dialkylamino), Phenylamino oder Benzylamino steht und

$R^1$ und $R^2$ gleich oder verschieden sind und einzeln für Wasserstoff oder für einen gegebenenfalls durch Halogen, Cyano, $C_1$-$C_4$-Alkoxy oder $C_1$-$C_4$-Alkylthio substituierten Alkylrest mit 1 bis 20 Kohlenstoffatomen, für gegebenenfalls durch Halogen substituiertes $C_2$-$C_5$-Alkenyl oder $C_2$-$C_5$-Alkinyl, für gegebenenfalls durch $C_1$-$C_4$-Alkyl, $C_1$-$C_4$-Alkoxycarbonyl, Phenoxybenzyloxycarbonyl und/oder Halogen substituiertes $C_3$-$C_8$-Cycloalkyl, für gegebenenfalls durch Halogen, $C_1$-$C_4$-Alkyl oder $C_1$-$C_4$-Alkoxy substituiertes Phenyl-$C_1$-$C_4$-alkyl, für gegebenenfalls durch Halogen, Cyano, Nitro, $C_1$-$C_4$-Alkyl, $C_1$-$C_4$-Alkoxy, $C_1$-$C_4$-Alkylthio, Trifluormethyl und/oder durch gegebenenfalls halogen-substituiertes $C_1$-$C_2$-Alkylendioxy substituiertes Phenyl, für Furyl, Thienyl oder Pyridyl stehen.

Die Erfindung betrifft insbesondere Verbindungen der Formel (I), in welcher

X für Sauerstoff oder Schwefel steht,

R für einen gegebenenfalls durch Fluor oder Chlor substituierten Rest aus der Reihe $C_1$-$C_5$-Alkyl, Phenyl, $C_1$-$C_5$-Alkoxy, Phenoxy, Benzyloxy, $C_1$-$C_5$-Alkylthio, Phenylthio, Benzylthio und $C_1$-$C_5$-Alkylamino (Mono- und Dialkylamino) steht und

$R^1$ und $R^2$ gleich oder verschieden sind und einzeln für Wasserstoff oder für einen gegebenenfalls durch Fluor, Chlor, Methoxy oder Methylthio substituierten Alkylrest mit 1 bis 10 Kohlenstoffatomen, für $C_2$-$C_5$-Alkenyl, $C_3$-$C_6$-Cycloalkyl, für gegebenenfalls durch Chlor substituiertes Phenyl-$C_1$-$C_2$-alkyl, für gegebenenfalls durch Fluor, Chlor, Cyano, Nitro, Methyl, Methoxy, Trifluormethyl und/oder Methylendioxy substituiertes Phenyl, für Thienyl oder für Pyridyl stehen.

Halogen bedeutet Fluor, Chlor, Brom und Jod, vorzugsweise Fluor, Chlor und Brom.

Verwendet man bei der Verfahrensvariante (a) als Ausgangsstoffe beispielsweise O-Ethyl-O-(1-cyano-2-methylpropyl)-thiophosphorsäureesterchlorid, Acetaldehyd und Natriumcyanid, so kann die Reaktion dieser Verbindungen durch folgendes Formelschema skizziert werden:

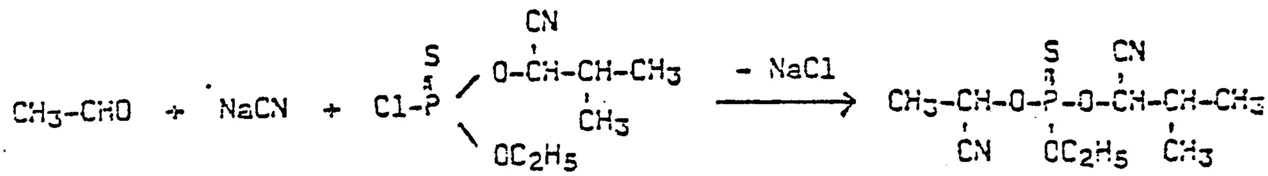


Verwendet man bei der erfindungsgemäßen Verfahrensvariante (b) als Ausgangsstoffe beispielsweise Ethanthiophosphonsäuredichlorid, Acetaldehyd und Natriumcyanid, so kann die Reaktion dieser Verbindungen durch folgendes Formelschema skizziert werden:

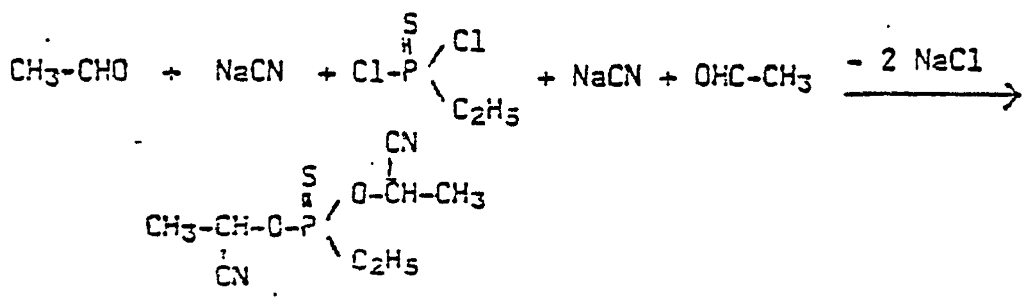


Verwendet man bei der Verfahrensvariante (c) als Ausgangsstoffe beispielsweise Ethanphosphonsäuredichlorid und 2-Hydroxypropionsäurenitril, so kann die Reaktion dieser Verbindungen durch folgendes Formelschema skizziert werden:

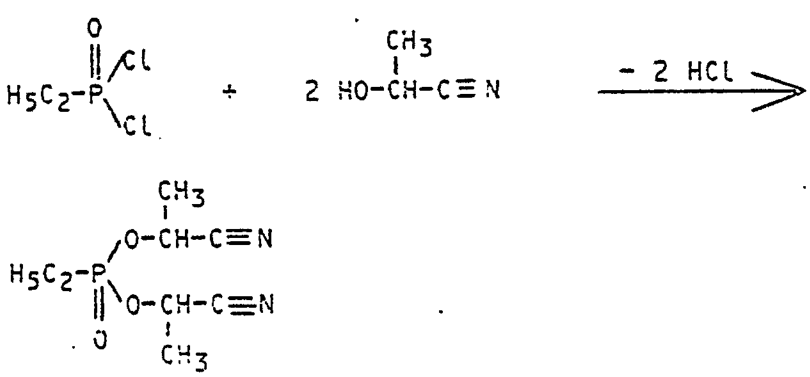

Die bei der erfindungsgemäßen Verfahrensvariante (a) als Ausgangsstoffe zu verwendenden (Thiono)(Dithio)-Phosphor-(phosphon)-säurecyanhydrinesterchloride sind durch die Formel (II) definiert. In dieser Formel stehen R und $R^1$ für diejenigen Reste, welche oben bei der Definition in Formel (I) angegeben sind.

Als Beispiele für die Verbindungen der Formel (II) seien genannt:

Tabelle 1

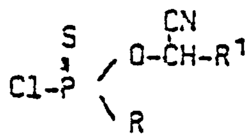

(II)

| R | $R^1$ |
|---|---|
| $C_2H_5O$ | 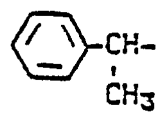 |
| n-$C_3H_7S$ | $C_3H_7$-iso |
| $C_2H_5O$ | 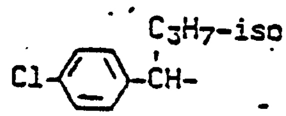 |
| n-$C_3H_7S$ | 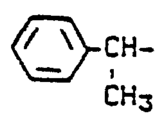 |
| $C_2H_5O$ | 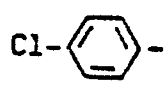 |
| $N(CH_3)_2$ | 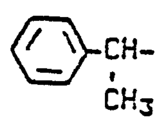 |
| $C_2H_5O$ | $C_3H_7$-iso |

Fortsetzung Tabelle 1

| R | $R^1$ |
|---|---|
| 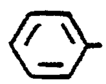 | $C_3H_7$-iso |
| $CH_3$ | $C_3H_7$-iso |
| $C_2H_5$ | $C_3H_7$-iso |
| $C_2H_5$ | 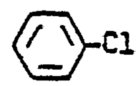 |
| $C_2H_5$ | $C_2H_5$ |
| $C_2H_5$ | $CH_3$ |
| n-$C_3H_7S$ | $CH_3$ |
| $C_2H_5O$ | $CH_3$ |
| $CH_3$ | $CH_3$ |
| $C_2H_5O$ | 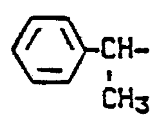 |
| iso-$C_3H_7S$ | $CH_3$ |
| n-$C_3H_7S$ | $C_2H_5$ |

Die Verbindungen der Formel (II) können hergestellt werden durch Umsetzung von Aldehyden mit Thio-phosphor-(phosphon)-säuredichloriden in Gegenwart von äquimolaren Mengen wasserlöslicher Cyanide wie z.B. Natriumcyanid, in Gegenwart von Wasser und mit Wasser praktisch nicht mischbarer organischer Lösungsmittel wie z.B. n-Hexan und gegebenenfalls in Gegenwart von Katalysatoren, welche gewöhnlich bei Reaktionen in Zweiphasensystemen aus Wasser und mit Wasser nicht mischbaren organischen Lösungsmitteln zur Phasentransfer von Reaktanden dienen wie z.B. Tetrabutylammoniumbromid, bei Temperaturen zwischen 0 und 80°C.

Die weiter bei den erfindungsgemäßen Verfahrensvarianten (a) und (b) als Ausgangsstoffe zu verwendenden Aldehyde sind durch die Formeln (III) und (V) definiert. In diesen Formeln steht $R^2$ bzw. $R^1$ für diejenigen Reste, welche oben bei der Definition von $R^2$ bzw. $R^1$ in Formel (I) angegeben sind.

Als Beispiele für die Verbindungen der Formel (III) bzw. (V) seien genannt:
Formaldehyd, Acetaldehyd, Propionaldehyd, Butyraldehyd, iso-Butyraldehyd, Valeraldehyd, iso-Valeraldehyd, sec.-Valeraldehyd, Capronaldehyd, iso-Capronaldehyd, sec.-Capronaldehyd, Pivalaldehyd, Acrolein, Crotonaldehyd, Methoxyacetaldehyd, Methylthioacetaldehyd, Cyclohexancarbaldehyd, Benzaldehyd, 4-Chlor-benzaldehyd, 4-Methylbenzaldehyd, 3,4-Methylendioxy-benzaldehyd, 4,5-Methylendioxy-2-nitro-benzaldehyd, Phenylacetaldehyd, $\alpha$-Phenyl-

propionaldehyd, Thiophen-2-carbaldehyd, Thiophen-3-carbaldehyd, Pyridin-2-carbaldehyd und Pyridin-3-carbaldehyd.

Die Ausgangsverbindungen der Formeln (III) und (V) sind bekannt.

In Wasser lösliche Cyanide, welche beim erfindungsgemäßen Verfahren (a) verwendet werden können, sind beispielsweise Alkalicyanide, wie Natriumcyanid und Kaliumcyanid; Natriumcyanid wird bevorzugt verwendet.

Als mit Wasser nicht mischbare Lösungsmittel werden bei der erfindungsgemäßen Verfahrensvariante (a) vorzugsweise Kohlenwasserstoffe, insbesondere geradkettige oder verzweigte Alkane oder Cycloalkane mit 5 bis 10 Kohlenstoffatomen, wie z.B. n-Pentan, n-Hexan, n-Heptan, n-Octan, n-Nonan, n-Decan, 2-Methylpentan, 3-Methylpentan, 2-Methylhexan, 2,2,4-Trimethylpentan, Cyclohexan, Methylcyclohexan, oder auch Methylbenzole, wie z.B. Toluol oder Xylole, sowie auch Gemische dieser Kohlenwasserstoffe eingesetzt.

Als Katalysatoren werden bei der erfindungsgemäßen Verfahrensvariante (a) vorzugsweise Verbindungen verwendet, welche gewöhnlich bei Reaktionen in Zweiphasensystemen aus Wasser und mit Wasser nicht mischbaren organischen Lösungsmitteln zum Phasentransfer

von Reaktanden dienen (Phasentransferkatalysatoren). Als solche sind vor allem Tetraalkyl- und Trialkylaralkyl-ammoniumsalze mit vorzugsweise 1 bis 10, insbesondere 1 bis 8 Kohlenstoffen je Alkylgruppe, vorzugsweise Phenyl als Arylbestandteil der Aralkylgruppe und vorzugsweise 1 bis 4, insbesondere 1 oder 2 Kohlenstoffatomen im Alkylteil der Aralkylgruppen bevorzugt. Hierbei kommen vor allem die Halogenide, wie Chloride, Bromide und Jodide, vorzugsweise die Chloride und Bromide in Frage. Beispielhaft seien Tetrabutylammoniumbromid, Benzyl-triethylammoniumchlorid und Methyltrioctylammoniumchlorid genannt.

Die Reaktionstemperatur wird bei der erfindungsgemäßen Verfahrensvariante (a) zwischen etwa 0 und 80°C, vorzugsweise zwischen etwa 0 und 30°C gehalten. Das Verfahren wird vorzugsweise bei Normaldruck durchgeführt.

Auf 1 Mol Thiono(Dithio)-phosphor-(phosphon)-säurecyanhydrinesterchlorid der Formel (II) setzt man im allgemeinen etwa zwischen 0,6 und 1,1 Mol, vorzugsweise etwa 0,75 bis 1,0 Mol Aldehyd der Formel (III), zwischen etwa 1,0 und 1,5 Mol, vorzugsweise etwa 1,1 bis 1,3 Mol Cyanid und gegebenenfalls zwischen etwa 0,001 und 0,05 Mol, vorzugsweise etwa 0,01 bis 0,03 Mol Katalysator ein.

In einer bevorzugten Ausführungsform der erfindungsgemäßen Verfahrensvariante (a) werden die Ausgangsverbindungen der Formeln (II) und (III), der Katalysator

und das Cyanid in dem mit Wasser nicht mischbaren Lösungsmittel gelöst und zu dieser Lösung wird langsam Wasser gegeben, wobei gegebenenfalls zunächst durch Außenkühlung die Reaktionstemperatur auf etwa 0 bis 10°C gebracht wird. Das Reaktionsgemisch wird dann mehrere Stunden bei etwa 20°C gerührt.

Zur Aufarbeitung wird gegebenenfalls mit weiterem mit Wasser nicht mischbarem Lösungsmittel verdünnt, die organische Phase abgetrennt, mit Wasser gewaschen, getrocknet und filtriert. Das Filtrat wird durch Destillation unter vermindertem Druck vom Lösungsmittel befreit, wobei man das Rohprodukt als öligen Rückstand erhält.

Die bei der erfindungsgemäßen Verfahrensvariante (b) als Ausgangsstoffe zu verwendenden Thio-phosphor-(phosphon)-säuredichloride sind durch die Formel (IV) definiert. In dieser Formel steht R für diejenigen Reste, welche oben bei der Definition in Formel (I) angegeben sind.

Als Beispiele für die Verbindungen der Formel (IV) seien genannt: Methan-, Ethan-, Propan-, Butan- und Benzol-thionophosphonsäuredichlorid; O-Methyl-, O-Ethyl-, O-n- und O-iso-Propyl-, O-n-, O-iso- und O-sec.-Butyl-, O-Phenyl- und O-Benzyl-thionophosphorsäureesterdichlorid; S-Methyl-, S-Ethyl-, S-n- und S-iso-Propyl-, S-n-, S-iso- und S-sec.-Butyl-, S-Phenyl- und S-Benzyldithiophosphorsäureesterdichlorid.

Die Verbindungen der Formel (IV) sind bekannt und/oder können in üblicher Weise nach an sich bekannten Verfahren hergestellt werden (vgl. Methoden der organischen Chemie (Houben-Weyl-Müller), 4. Aufl., Band 12/1 (1963), S. 387-406 und S. 552-557; Band 12/2 (1964), S. 212-225, 590-594 und 682-683; Thieme-Verlag Stuttgart).

Als in Wasser lösliche Cyanide, welche bei der erfindungsgemäßen Verfahrensvariante (b) verwendet werden können, kommen vorzugsweise die Cyanide in Frage, die bei der Verfahrensvariante (a) bereits genannt wurden.

Als Lösungsmittel kommen für die Umsetzung gemäß Verfahrensvariante (b) vorzugsweise die Solventien in Frage, die bei der Verfahrensvariante (a) bereits genannt wurden.

Als Katalysatoren kommen für die Umsetzung gemäß Verfahrensvariante (b) vorzugsweise die Katalysatoren in Frage, die bei der Verfahrensvariante (a) bereits genannt wurden.

Die Reaktionstemperatur wird beim erfindungsgemäßen Verfahren (b) zwischen etwa 0 und 80°C, vorzugsweise zwischen etwa 0 und 30°C gehalten. Das Verfahren wird vorzugsweise bei Normaldruck durchgeführt.

Auf 1 Mol Thiophosphor-(phosphon)-säuredichlorid der Formel (IV) setzt man im allgemeinen zwischen etwa 2,5

bis 4,0 Mol, vorzugsweise zwischen etwa 3,0 und 3,5 Mol Aldehyd der Formel (III) bzw. (V), zwischen etwa 2,0 und 3,0 Mol, vorzugsweise etwa 2,2 bis 2,6 Mol Cyanid und gegebenenfalls zwischen etwa 0,002 und 0,1 Mol, vorzugsweise zwischen 0,02 bis 0,06 Mol Katalysator ein.

In einer bevorzugten Ausführungsform der erfindungsgemäßen Verfahrensvariante (b) werden die Ausgangsverbindungen der Formeln (IV) und (V) bzw. (III), der Katalysator und das Cyanid in dem mit Wasser nicht mischbaren Lösungsmittel gelöst und zu dieser Lösung wird langsam Wasser gegeben, wobei gegebenenfalls zunächst durch Außenkühlung die Reaktionstemperatur auf etwa 0 bis 5°C gebracht wird. Das Reaktionsgemisch wird dann mehrere Stunden bei etwa 20°C gerührt.

Zur Aufarbeitung wird gegebenenfalls mit weiterem mit Wasser nicht mischbarem Lösungsmittel verdünnt, die organische Phase abgetrennt, mit Wasser gewaschen, getrocknet und filtriert. Das Filtrat wird durch Destillation unter gemindertem Druck vom Lösungsmittel befreit, wobei man das Rohprodukt als öligen Rückstand erhält.

Die bei der erfindungsgemäßen Verfahrensvariante (c) als Ausgangsstoffe zu verwendenden Phosphon-(phosphor)-säuredichloride sind durch die Formel (VI) definiert. In dieser Formel steht R für diejenigen Reste, welche oben bei der Definition von R in Formel (I) angegeben sind.

Als Beispiele für die Verbindungen der Formel (VI) seien genannt: Methan-, Ethan-, Propan-, Butan- und Benzolphosphonsäuredichlorid; O-Methyl-, O-Ethyl-, O-n- und O-iso-Propyl-, O-n-, O-iso- und O-sec-Butyl-, O-Phenyl- und O-Benzyl-phosphorsäureesterdichlorid; S-Methyl-, S-Ethyl-, S-n- und S-iso-Propyl-, S-n-, S-iso- und S-sec-Butyl-, S-Phenyl- und S-Benzyl-thiophosphorsäureesterdichlorid.

Die Verbindungen der Formel (VI) sind bekannt und/oder können in üblicher Weise nach an sich bekannten Verfahren hergestellt werden (vgl. Methoden der organischen Chemie (Houben-Weyl-Müller), 4. Aufl., Band 12/1 (1963), S. 387 ff; Band 12/2 (1964), S. 212-225, S. 383 und S. 596; Thieme-Verlag Stuttgart).

Die weiter bei der erfindungsgemäßen Verfahrensvariante (c) als Ausgangsstoffe zu verwendenden substituierten Acetonitrile bzw. deren Alkalimetallsalze sind durch die Formeln (VII) und (VIII) definiert. In dieser Formel steht $R^1$ bzw. $R^2$ für diejenigen Reste, welche oben bei der Definition von $R^1$ bzw. $R^2$ in Formel (I) angegeben sind, und Z bzw. Z' steht für Wasserstoff, Lithium, Natrium oder Kalium.

Als Beispiele für die Verbindungen der Formel (VII) bzw. (VIII) seien genannt: Hydroxyacetonitril, 2-Hydroxy-propannitril, 2-Hydroxy-butannitril, 2-Hydroxypentannitril, 2-Hydroxy-3-methylbutannitril, 2-Hydroxy-hexannitril, 2-Hydroxy-3-methyl-pentannitril, 2-Hydroxy-4-methyl-pentannitril, 2-Hydroxy-heptannitril, 2-Hydroxy-3-methyl-hexannitril, 2-Hydroxy-4-methyl-hexannitril, 2-Hydroxy-octannitril, 2-Hydroxy-3-methyl-heptannitril, 2-Hydroxy-4-methyl-heptannitril, 2-Hydroxy-3,3-dimethyl-butannitril, 2-Hydroxy-4-butennitril, 2-Hydroxy-3-pentennitril, 2-Hydroxy-2-methoxy-acetonitril, 2-Hydroxy-2-methylthio-acetonitril, 2-Cyclohexyl-2-hydroxyacetonitril, 2-Hydroxy-2-phenylacetonitril, 2-(4-chlorphenyl)-2-hydroxyacetonitril, 2-(4-Methylphenyl)-2-hydroxyacetonitril, 2-(3,4-Methylendioxyphenyl)-2-hydroxyacetonitril, 2-(4,5-Methylendioxy-2-nitrophenyl)-2-hydroxyacetonitril, 2-Hydroxy-3-phenyl-propannitril, 2-Hydroxy-2-phenyl-propannitril, 2-Hydroxy-2-(2-thienyl)-acetonitril, 2-Hydroxy-2-(3-thienyl)-acetonitril, 2-Hydroxy-2-(2-pyridyl)-acetonitril und 2-Hydroxy-2-(3-pyridyl)-acetonitril sowie die Alkalimetallsalze, wie Lithium, Natrium und Kaliumsalze dieser Verbindungen.

Die Ausgangsverbindungen der Formel (VII) bzw. (VIII) sind bekannt oder können in üblicher Weise nach an sich bekannten Verfahren hergestellt werden (vgl. Methoden der organischen Chemie (Houben-Weyl-Müller), 4. Aufl., Band 8/3 (1952), S. 274-278; Thieme-Verlag Stuttgart).

Als Verdünnungsmittel kommen bei der Verfahrensvariante (c) praktisch alle inerten organischen Lösungsmittel in

Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol, ferner Ether wie Diethyl- und Dibutylether, Glykoldimethylether und Diglykoldimethylether, Tetrahydrofuran und Dioxan, weiterhin Ketone, wie Aceton, Methylethyl-, Methylisopropyl- und Methylisobutylketon, außerdem Ester, wie Essigsäure-methylester und -ethylester, ferner Nitrile, wie z.B. Acetonitril und Propionitril, darüber hinaus Amide, wie z.B. Dimethylformamid, Dimethylacetamid und N-Methyl-pyrrolidon, sowie Dimethylsulfoxid, Tetramethylensulfon und Hexamethylenphosphorsäuretriamid.

Als Säureakzeptoren können bei der Verfahrensvariante (c) alle üblichen Säurebindemittel verwendet werden. Hierzu gehören vorzugsweise Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Trimethylamin, Triethylamin, Dimethylanilin, Dimethylbenzylamin und Pyridin.

Die Reaktionstemperatur wird bei der Verfahrensvariante (c) zwischen etwa -80°C und +80°C, vorzugsweise zwischen etwa -60°C und +30°C gehalten. Das Verfahren wird vorzugsweise bei Normaldruck durchgeführt.

Bei der Durchführung der Verfahrensvariante (c) setzt man auf etwa 1 Mol der Verbindung der Formel (VI) vorzugsweise etwa 1,5 bis 2,5 Mol substituiertes Acetonitril der Formel (VII) bzw. (VIII) ein, wobei das substituierte Acetonitril für den Fall, daß Z bzw. Z' für Natrium, Kalium oder Lithium steht, vorzugsweise in situ aus dem entsprechenden Hydroxyacetonitril und einer starken Base, wie z.B. Butyllithium, Methyllithium, Natrium, Kalium, Natriumhydrid und Natriumamid erzeugt wird. Die Isolierung der Endprodukte erfolgt in allgemein üblicher Weise.

Die neuen (Thiono)(Dithio)-Phosphor-(phosphon)-säuredicyanhydrinester der Formel (I) weisen in Mischung mit Stoffen beliebiger Konstitution, welche gegen Arthropoden wirksam sind, starke synergistische Wirkungen auf, welches ihre Verwendung in Schädlingsbekämpfungsmitteln ermöglicht.

Bevorzugt werden die neuen (Thiono)(Dithio)-Phosphor-(phosphon)-säuredicyanhydrinester der Formel (I) zusammen mit Arthropodiziden

A) Carbaminsäureestern und/oder

B) Carbonsäureestern einschließlich der natürlichen sowie synthetischen Pyrethroide und/oder

C) Phosphorverbindungen, wie Phosphorsäure- und Phosphonsäureestern, einschließlich der Thio- und Dithioverbindungen und/oder

D) Halogen-(cyclo)-alkanen, wie z.B. Hexachlorcyclohexan

verwendet.

Überraschenderweise ist die Wirkung der neuen erfindungsgemäßen Wirkstoffkombinationen gegen Arthropoden wesentlich höher als die Wirkung der Einzelkomponenten bzw. die Summe der Wirkungen der Einzelkomponenten. Sie ist ferner wesentlich höher als die Wirkung von Wirkstoffkombinationen mit dem bekannten Synergisten Piperonylbutoxid. Die erfindungsgemäßen (Thiono)(Dithio)-Phosphor(phosphon)-säuredicyanhydrinester zeigen außerdem ausgezeichnete synergistische Wirksamkeit nicht nur bei einer Wirkstoffklasse, sondern bei Wirkstoffen aus den verschiedensten chemischen Stoffgruppen.

Die synergistische Wirkung der Verbindungen der Formel (I) zeigt sich besonders bevorzugt bei

A) Carbaminsäureestern der Formel (IX)

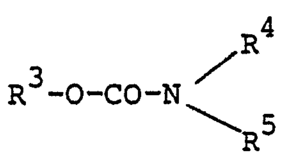

(IX)

in welcher

$R^3$ für einen gegebenenfalls substituierten carbocyclischen oder heterocyclischen aromatischen Rest oder für einen gegebenenfalls substituierten Oximrest steht (wobei die weiter unten erläuterten Reste $R^3$ bevorzugt werden),

$R^4$ für $C_1$-$C_4$-Alkyl steht und

$R^5$ für Wasserstoff, $C_1$-$C_4$-Alkyl oder für einen Rest Y steht, wobei

Y für den Rest -CO-$R^6$ steht, worin

$R^6$ für Halogen, $C_1$-$C_4$-Alkyl, $C_1$-$C_4$-Alkoxy, $C_3$-$C_5$-Alkenoxy, $C_3$-$C_5$-Alkinoxy, $C_1$-$C_4$-Alkylthio, $C_1$-$C_4$-Alkyl-amino, Di-$C_1$-$C_4$-Alkylamino, $C_1$-$C_4$-Alkyl-hydroxylamino,

für gegebenenfalls durch Halogen, Nitro, Cyano, Trifluormethyl, $C_1$-$C_4$-Alkyl, $C_1$-$C_4$-Alkoxy, $C_1$-$C_4$-Alkylendioxy, $C_1$-$C_4$-Alkylthio, $C_1$-$C_4$-Alkoxy-carbonyl substituiertes Phenoxy, Phenylthio oder Phenylamino, für 2,3-Dihydro-2,2-dimethyl-7-benzofuranyl oder für den Rest

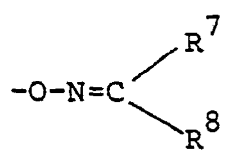

steht, worin

$R^7$ für Wasserstoff, $C_1$-$C_4$-Alkyl oder Di-$C_1$-$C_4$-alkylamino-carbonyl steht und

$R^8$ für $C_1$-$C_4$-Alkyl, $C_1$-$C_4$-Alkylthio, Cyano-$C_1$-$C_4$-alkylthio, $C_1$-$C_4$-Alkylthio-$C_1$-$C_4$-alkyl steht,

oder die beiden Reste $R^7$ und $R^8$ zusammen für gegebenenfalls durch Sauerstoff, Schwefel, SO oder $SO_2$ unterbrochenes $C_2$-$C_8$-Alkandiyl stehen, oder

in welcher

Y für den Rest $-S_n(O)_m-R^9$ steht, worin

n für 1 oder 2 und

m für 0, 1 oder 2 stehen und

$R^9$ für gegebenenfalls durch Halogen substituiertes $C_1$-$C_4$-Alkyl, $C_3$-$C_5$-Alkenyl, $C_3$-$C_5$-Alkinyl oder $C_3$-$C_6$-Cycloalkyl, für gegebenenfalls durch Halogen, Cyano, Nitro, Trifluormethyl, Trifluormethoxy, Trifluormethylthio, $C_1$-$C_4$-Alkyl oder $C_1$-$C_4$-Alkoxy substituiertes Phenyl, Benzyl oder Phenylethyl oder für den Rest

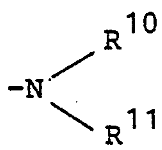

steht, worin

$R^{10}$ für $C_1$-$C_4$-Alkyl, $C_3$-$C_5$-Alkenyl, $C_3$-$C_5$-Alkinyl, $C_3$-$C_6$-Cycloalkyl oder Benzyl steht und

$R^{11}$ für $C_1$-$C_4$-Alkyl, $C_3$-$C_5$-Alkenyl, $C_3$-$C_5$-Alkinyl, $C_3$-$C_6$-Cycloalkyl, Benzyl, Phenylethyl, Halogen-carbonyl, Formyl, $C_1$-$C_4$-Alkyl-carbonyl, $C_1$-$C_4$-Alkoxy-carbonyl, $C_1$-$C_4$-Alkoxyphenoxy-carbonyl, $C_3$-$C_5$-Alkinoxy-carbonyl, $C_3$-$C_5$-Alkenoxycarbonyl, $C_1$-$C_4$-Alkylthiocarbonyl, $C_1$-$C_4$-Alkyl-amino-carbonyl, $C_1$-$C_4$-Alkyl-hydroxylamino-carbonyl, $C_1$-$C_{10}$-Alkyl-phenoxycarbonyl, Di-$C_1$-$C_4$-alkyl-amino-carbonyl, Phenylthiocarbonyl, Phenoxycarbonyl, 2,3-Dihydro-2,2-dimethyl-7-benzofuranyloxycarbonyl, für gegebenenfalls durch Halogen, Cyano, Nitro, Trifluormethyl, $C_1$-$C_{10}$-Alkyl oder $C_1$-$C_4$-Alkoxy substituiertes Phenylsulfenyl, Phenylsulfinyl, Phenylsulfonyl oder Phenyl steht, oder für den Rest

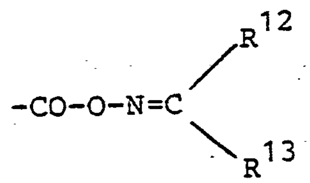

steht, worin

$R^{12}$ die oben für $R^7$ angegebene Bedeutung und

$R^{13}$ die oben für $R^8$ angegebene Bedeutung hat,

wobei ferner im Rest 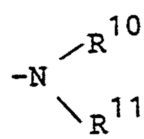 die Reste $R^{10}$ und $R^{11}$ zusammen für eine gegebenenfalls durch Sauerstoff oder

Schwefel unterbrochene Kohlenwasserstoffkette mit 3 bis 8 Kohlenstoffatomen stehen, worin weiter $R^9$ auch für den gleichen Rest stehen kann, an den der Rest $-S_n(O)_m-R^9$ gebunden ist.

Als Wirkstoffkomponenten ganz besonders bevorzugt sind Carbaminsäureester der Formel (IX), in welcher

$R^3$ für gegebenenfalls durch $C_1$-$C_4$-Alkyl, $C_2$-$C_4$-Alkenyl, $C_1$-$C_4$-Alkoxy, $C_1$-$C_4$-Alkoxy-methyl, $C_1$-$C_4$-Alkylthio, $C_1$-$C_4$-Alkylthio-methyl, $C_1$-$C_4$-Alkylamino, Di-($C_1$-$C_4$-alkyl)-amino, Di-($C_3$-$C_4$-alkenyl)-amino, Halogen, Dioxolanyl, Methylendioxy und/oder durch den Rest $-N=CH(CH_3)_2$ substituierte Reste aus der Reihe Phenyl, Naphthyl, 2,3-Dihydro-7-benzofuranyl, Pyrazolyl oder Pyrimidinyl steht, oder in welcher

$R^3$ für einen Alkylidenaminorest der Formel (IXa)

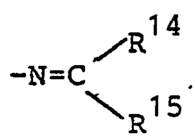

(IXa)

steht, in welcher

$R^{14}$ und $R^{15}$ die oben für $R^7$ bzw. $R^8$ angegebene Bedeutung haben, und

$R^4$ für $C_{1-4}$-Alkyl steht und

$R^5$ für Wasserstoff oder $C_1$-$C_4$-Alkyl (vorzugsweise für Wasserstoff) steht.

Als Beispiele für die Carbaminsäureester der Formel (IX) seien genannt: 2-Methyl-phenyl-, 2-Ethyl-phenyl-, 2-iso-Propyl-phenyl-, 2-sec-Butyl-phenyl-, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylaminophenyl-, 2-Ethylthiomethyl-phenyl-, 1-Naphthyl-, 2,3-Dihydro-2,2-dimethyl-7-benzofuranyl, 2,3-(Dimethyl-methylendioxy)-phenyl-, 2-(4,5-Dimethyl-1,3-dioxolan-2-yl)-phenyl-, 1-Methylthio-ethyliden-amino-, 2-Methylthio-2-methylpropylidenamino-, 1-(2-Cyano-ethylthio)-ethylidenamino- und 1-Methylthiomethyl-2,2-dimethylpropylidenamino-N-methyl-carbaminsäureester.

Die synergistische Wirkung der Verbindungen der Formel (I) zeigt sich weiter bevorzugt bei

B) Carbonsäureestern der Formel (X)

$$R^{16}-CO-O-\underset{}{\overset{R^{17}}{\overset{|}{C}}}H-R^{18} \qquad (X)$$

in welcher

$R^{16}$ für einen offenkettigen oder cyclischen Alkylrest steht, der gegebenenfalls substituiert ist durch Halogen, Alkyl, Cycloalkyl, durch gegebenenfalls durch Halogen, Alkyl und/oder Alkoxy substituiertes Alkenyl, durch Phenyl oder Styryl, welche gegebenenfalls durch Halogen, gegebenenfalls Halogen-substituierte Reste aus der Reihe Alkyl, Alkoxy, Alkylendioxy und/oder Alkylthio substituiert sind, durch spirocyclisch verknüpftes, gegebenenfalls Halogen-substituiertes Cycloalk(en)yl, welches gegebenenfalls benzannelliert ist, in welcher weiter

$R^{17}$ für Wasserstoff, Alkyl, Halogenalkyl, Alkenyl, Alkinyl oder Cyano steht, und

$R^{18}$ für einen gegebenenfalls substituierten Alkyl- oder Arylrest oder für einen Heterocyclus steht, oder zusammen mit $R^{17}$ und dem Kohlenstoffatom, an das beide Reste gebunden sind, einen Cyclopentenonring bildet.

Ganz besonders als Wirkstoffkomponenten bevorzugt sind Carbonsäureester der Formel (X), in welcher

$R^{16}$ für den Rest

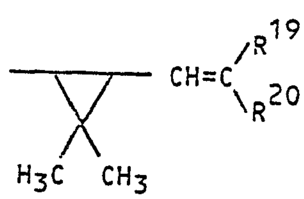

steht, worin

$R^{19}$ für Wasserstoff, Methyl, Fluor, Chlor oder Brom und

$R^{20}$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls Halogen-substituierte Reste der Reihe $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht, oder worin beide Reste $R^{19}$ und $R^{20}$ für $C_2$-$C_5$-Alkandiyl (Alkylen) stehen; oder in welcher

$R^{16}$ für den Rest $-\underset{R^{22}}{\underset{|}{CH}}-R^{21}$ steht, worin

$R^{21}$ für gegebenenfalls durch Halogen und/oder durch gegebenenfalls Halogen-substituierte Reste der Reihe $C_1$-$C_4$-Alkyl, $C_1$-$C_4$-Alkoxy, $C_1$-$C_4$-Alkylthio oder $C_1$-$C_2$-Alkylendioxy substituiertes Phenyl steht und

$R^{22}$ für Isopropyl oder Cyclopropyl steht;

oder in welcher

$R^{16}$ für einen der Reste

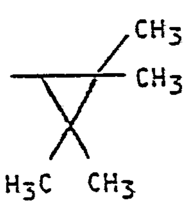

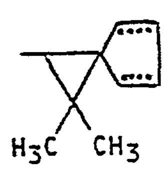

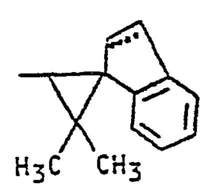

wobei die gepunkteten Linien mögliche Doppelbindungen andeuten sollen, oder für Methyl steht, und in welcher weiter

$R^{17}$ für Wasserstoff, $C_1$-$C_4$-Alkyl, $C_1$-$C_4$-Halogenalkyl, Cyano oder Ethinyl steht und

$R^{18}$ gegebenenfalls durch Halogen substituierte Reste der Reihe Phenyl, Furyl oder Tetrahydrophthalimido steht, wobei diese Reste ihrerseits substituiert sein können durch gegebenenfalls durch Halogen und/oder durch einen gegebenenfalls Halogen-substituierten Rest der Reihe $C_1$-$C_4$-Alkyl, $C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl, wobei für $R^{18}$ vorzugsweise Pentafluorphenyl, 3,4-Dichlorphenyl, Phenoxyphenyl, welches in einem oder beiden Phenylringen durch Halogen substituiert sein kann oder für Tetrahydrophthalimido steht.

Weiter sind die natürlich vorkommenden Pyrethroide (wie Pyrethreum) als Carbonsäureester der Formel (X) besonders bevorzugt.

Als Beispiele für die Carbonsäureester der Formel (X) seien genannt:

Essigsäure-(2,2,2-trichlor-1-(3,4-dichlor-phenyl)-ethyl)-ester, 2,2-Dimethyl-3-(2-methyl-propen-1-yl)-cyclopropan-carbonsäure-(3,4,5,6-tetrahydro-phthalimido-methyl)-ester, 2,2-Dimethyl-3-(2,2-dichlorvinyl)-cyclopropan-carbonsäure-(3-phenoxy-benzyl)-ester, 2,2-Dimethyl-3-(2,2-dichlorvinyl)-cyclopropan-carbonsäure-(α-cyano-3-phenoxy-benzyl)-ester, 2,2-Dimethyl-3-(2,2-dichlorvinyl)-cyclopropancarbonsäure-(α-cyano-4-fluor-3-phenoxy-benzyl)-ester, 2,2-Dimethyl-3-(2,2-dichlorvinyl)-cyclopropancarbonsäure-(pentafluor-benzyl)-ester, 2,2-Dimethyl-3-(2,2-dibromvinyl)-cyclopropancarbonsäure-(α-cyano-3-phenoxy-benzyl)-ester und 3-Methyl-2-(4-chlor-phenyl)-butansäure-(α-cyano-3-phenoxy-benzyl)-ester.

Weiter zeigt sich die synergistische Wirkung der Verbindungen der allgemeinen Formel (I) bevorzugt bei

C) Phosphorsäure- und Phosphonsäureestern der allgemeinen Formel (XI)

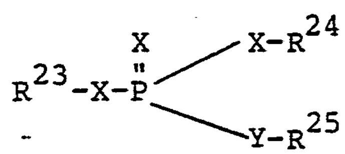

(XI)

in welcher

X jeweils für O oder S steht und

Y für O, S, -NH- oder für eine direkte Bindung zwischen dem zentralen P-Atom und $R^{25}$ steht und

$R^{23}$ und $R^{24}$ gleich oder verschieden sind und für gegebenenfalls substituiertes Alkyl oder Aryl stehen,

$R^{25}$ für Wasserstoff, gegebenenfalls substituiertes Alkyl, Aryl, Heteroaryl, Aralkyl, Alkenyl, Dioxanyl oder einen Oximrest oder für den gleichen Rest steht, an den es gebunden ist.

Besonders bevorzugt sind Phosphorsäure- und Phosphonsäureester der Formel (XI), in welcher

$R^{23}$ und $R^{24}$ gleich oder verschieden sind und für $C_1$-$C_4$-Alkyl oder Phenyl stehen,

$R^{25}$ für Wasserstoff, Alkyl mit 1 bis 4 Kohlenstoffatomen steht, das gegebenenfalls durch Halogen, Hydroxyl, Cyano, gegebenenfalls Halogen-substituiertes Phenyl, Carbamoyl, Alkylsulfonyl, Alkylsulfinyl, Alkylcarbonyl, Alkoxy, Alkylmercapto, Alkoxycarbonyl, Alkylaminocarbonyl, letztere mit jeweils bis zu 6 Kohlenstoffatomen, substituiert ist, für Alkenyl mit bis zu 4 Kohlenstoffatomen, das gegebenenfalls durch Halogen, gegebenenfalls Halogen-substituiertes Phenyl oder $C_1$-$C_4$-Alkoxycarbonyl substituiert ist, oder für den Rest der allgemeinen Formel (XIa)

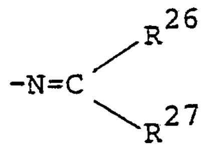

(XIa)

wobei $R^{26}$ und $R^{27}$ die oben für $R^7$ bzw. $R^8$ angegebene Bedeutung besitzen, oder für Cyano oder Phenyl stehen, und in welcher

$R^{25}$ ferner für Dioxanyl, das durch denselben Rest substituiert ist, an den $R^{25}$ gebunden ist, oder $R^{25}$ für den gleichen Rest, an den es gebunden ist, oder $R^{25}$ für Phenyl, das gegebenenfalls durch Methyl, Nitro, Cyano, Halogen und/oder Methylthio substituiert ist steht und $R^{25}$ außerdem besonders bevorzugt für gegebenenfalls durch $C_1$-$C_4$-Alkoxy, $C_1$-$C_4$-Alkylthiomethyl, $C_1$-$C_4$-Alkyl und/oder Halogen substituierte heteroaromatische Reste, wie Pyridinyl, Chinolinyl, Chinoxalinyl, Pyrimidinyl oder Benzo-1,2,4-triazinyl steht.

Im einzelnen seien genannt:

O,O-Dimethyl- bzw. O,O-Diethyl-O-(2,2-dichlor- bzw. 2,2-dibromvinyl)-phosphorsäureester,
O,O-Diethyl-O-(4-nitro-phenyl)-thionophosphorsäureester
O,O-Dimethyl-O-(3-methyl-4-methylthio-phenyl)-thionophosphorsäureester
O,O-Dimethyl-O-(3-methyl-4-nitro-phenyl)-thionophosphorsäureester,

O-Ethyl-S-n-propyl-O-(2,4-dichlorphenyl)-thionophosphorsäureester,

O-Ethyl-S-n-propyl-O-(4-methylthio-phenyl)-thionophosphorsäureester,

O,O-Dimethyl-S-(4-oxo-1,2,3-benzotriazin (3)yl-methyl)-thionothiolphosphorsäureester,

O-Methyl-O-(2-iso-propyl-6-methoxy-pyrimidin(4)yl)-thionomethanphosphonsäureester,

O,O-Diethyl-O-(2-iso-propyl-6-methyl-pyrimidin(4)yl)-thionophosphorsäureester,

O,O-Diethyl-O-(3-chlor-4-methyl-cumarin(7)yl)-thionophosphorsäureester,

O,O-Dimethyl-2,2,2-trichlor-1-hydroxy-ethan-phosphonsäureester,

O,O-Dimethyl-S-(methylaminocarbonyl-methyl)-thionophosphorsäureester.

Weiterhin zeigt sich die synergistische Wirkung der Verbindungen der allgemeinen Formel (I) bevorzugt bei

D) Halogen(cyclo)-alkanen, wie z.B. Hexachlorcyclohexan, 1,1,1-Trichlor-2,2-bis-(4-chlorphenyl)-ethan, 1,1,1-Trichlor-2,2-bis-(4-methoxyphenyl)-ethan und 1,1-Dichlor-2,2-bis-(4-ethylphenyl)-ethan.

Die Gewichtsverhältnisse der Synergisten und Wirkstoffe können in einem relativ großen Bereich variiert werden. Im allgemeinen werden die als Synergisten verwendeten Verbindungen der Formel (I) mit den übrigen Wirkstoffen

in Mischungsverhältnissen zwischen 1 : 100 und 100 : 1, vorzugsweise zwischen 1 : 5 und 5 : 1 (Gewichtsteile) eingesetzt.

Die erfindungsgemäßen Wirkstoffkombinationen besitzen nicht nur eine schnelle knock-down-Wirkung, sondern bewirken auch die nachhaltige Abtötung der tierischen Schädlinge, insbesondere von Insekten und Milben, die in der Landwirtschaft, in Forsten, im Vorrats- und Materialschutz sowie im Hygienebereich vorkommen. Sie sind gegen normal sensible und resistente Arten sowie gegen alle oder einzelne Entwicklungsstadien wirksam.

Zu den tierischen Schädlingen, welche unter Verwendung der Verbindungen der Formel (I) bekämpft werden können, gehören beispielsweise:

Aus der Ordnung der Isopoda z.B. Oniscus asellus, Porcellio scaber.
Aus der Ordnung der Thysanura z.B. Lepisma saccharina.
Aus der Ordnung der Orthoptera z.B. Blatta orientalis, Periplaneta americana, Leucophaea maderae, Blatella germanica, Acheta domesticus, Gryllotalpa spp., Locusta migratoria migratorioides, Schistocerca gregaria.
Aus der Ordnung der Dermaptera z.B. Forficula auricularia.
Aus der Ordnung der Isoptera z.B. Reticulitermes spp.
Aus der Ordnung der Anoplura z.B. Pediculus humanus corporis, Haematopinus spp., Linognathus spp.

Aus der Ordnung der Mallophaga z.B. Trichodectes spp., Damalinea spp.
Aus der Ordnung der Heteroptera z.B. Cimex lectularius, Rhodnius prolixus, Triatoma spp.
Aus der Ordnung der Homoptera z.B. Myzus spp., und Psylla spp.
Aus der Ordnung der Lepidoptera z.B. Ephestia kuehniella und Galleria mellonella.
Aus der Ordnung der Coleoptera z.B. Anobium punctatum, Rhizopertha dominica, Bruchidius obtectus, Acanthoscelides obtectus, Hylotrupes bajulus, Oryzaephilus surinamensis, Sitophilus spp., Dermestes spp., Trogoderma spp., Anthrenus spp., Attagenus spp., Lyctus spp., Ptinus spp., Niptus hololeucus, Gibbium psylloides, Tribolium spp. und Tenebrio molitor.
Aus der Ordnung der Hymenoptera z.B. Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Gastrophilus spp., Hyppobosca spp., Stomoxys spp., Oestrus spp., Hypoderma spp. und Tabanus spp.
Aus der Ordnung der Siphonaptera z.B. Xenopsylla cheopis, Ceratophyllus spp.
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae,

Boophilus spp., Rhipicephalus spp., Amblyomma spp., Hyalomma spp., Ixodes spp., Psoroptes spp., Chorioptes spp., Sarcoptes spp.

Die Wirkstoffkombinationen aus den Verbindungen der Formel (I) und den übrigen Wirkstoffen können in die üblichen Formulierungen übergeführt werden, wie Lösungen, Emulsionen, Spritzpulver, Suspensionen, Pulver, Stäubemittel, Schäume, Pasten, lösliche Pulver, Aerosole, Suspensions-Emulsionskonzentrate, Wirkstoffimprägnierte Natur- und synthetische Stoffe, Feinstverkapselungen in polymeren Stoffen, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffgemische mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie

Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol, sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel: nichtionogene und anionische Emulgatoren, wie Polyoxyethylen-Fettsäure-Ester, Polyoxyethylen-Fettalkohol-Ether, z.B. Alkylaryl-polyglykol-ether, Alkylsulfonate; als Dispergiermittel: z.B. Lignin, Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe, und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffkombination, vorzugsweise zwischen 0,5 und 90 %.

Die Anwendung der erfindungsgemäßen Wirkstoffkombinationen erfolgt in Form ihrer handelsüblichen Formulierungen und/oder den aus diesen Formulierungen bereiteten Anwendungsformen.

Der gesamte Wirkstoffgehalt (einschließlich Synergist) der aus den handelsüblichen Formulierungen bereiteten Anwendungsformen kann in weiten Bereichen variieren. Die Wirkstoffkonzentration der Anwendungsformen kann von 0,0001 bis zu 100 Gew.-% Wirkstoffkombination, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffkombinationen durch eine hervorragende Resudualwirkung auf Holz und Ton sowie durch eine gute Alkalistabilität auf gekälkten Unterlagen aus.

Anhand der folgenden Beispiele soll die Wirksamkeit der erfindungsgemäß verwendbaren Verbindungen der Formel (I) erläutert werden:

I. Beispiele für erfindungsgemäß verwendbare Wirkstoffe

A) 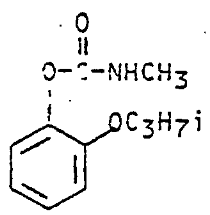 (Propoxur)

B) 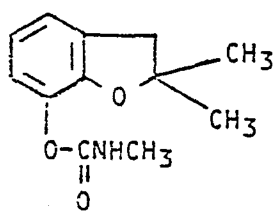 (Carbofuran)

C) 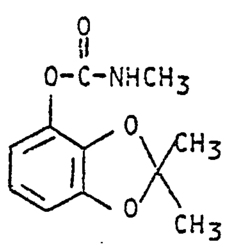 (Bendiocarb)

D) 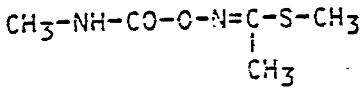 (Methomyl)

E) Pyrethrine natürlicher Herkunft als 25 %-iger Extrakt.

F) 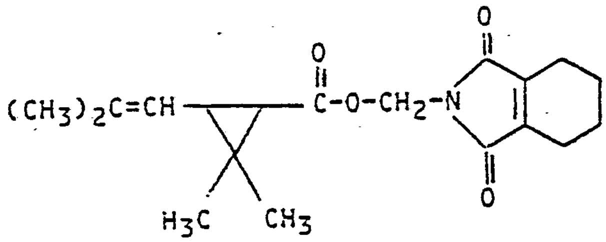 (Tetramethrin)

G) 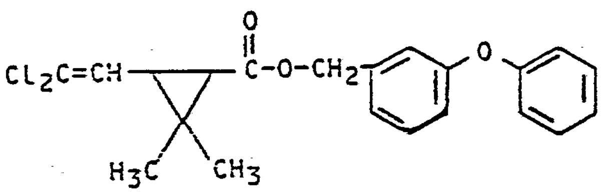 (Permethrin)

H) 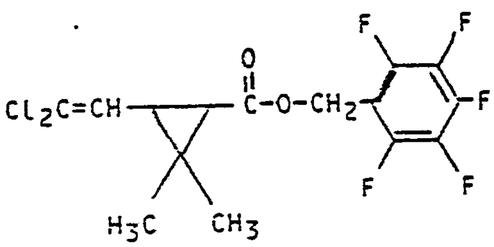

I) 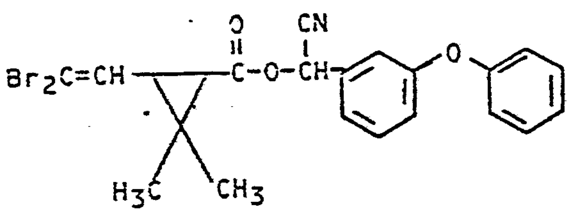 (Decamethrin)

J) 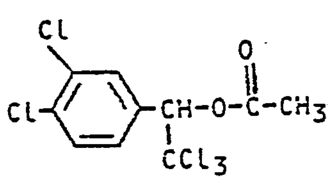 (Penfenate)

K) 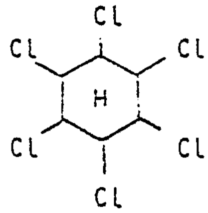 (γ-Hexachlorcyclohexan)

L) 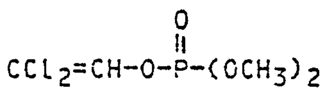 (DDVP)

M) 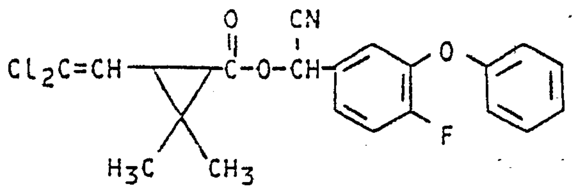

II. Beispiele von erfindungsgemäß verwendbaren Synergisten :

1) 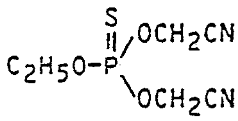

2) 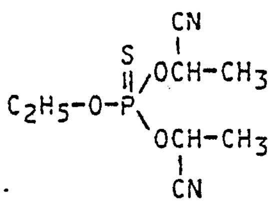

3) 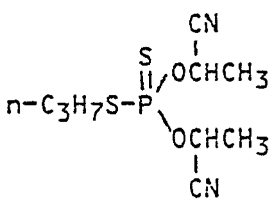

4) 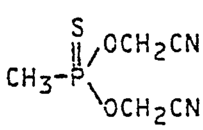

5) 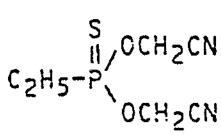

6)

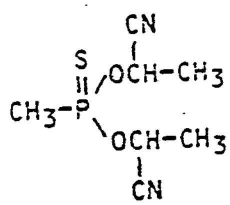

7)

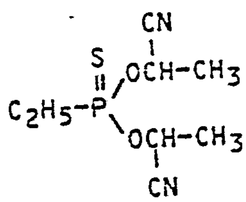

8)

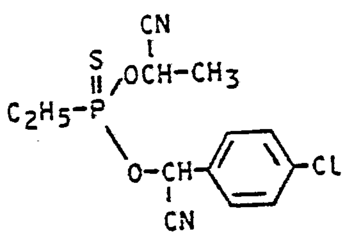

9) Piperonylbutoxid (bekannt)

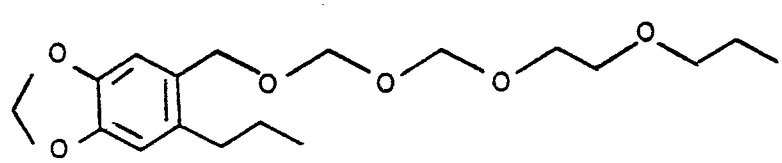

## III. Testdurchführung

$LT_{100}$-Test

Testtiere: Gegen Phosphorsäureester und Carbamate resistente weibliche Musca domestica (Stamm Weymanns)

Lösungsmittel: Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipettiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100 %ige knock-down-Wirkung erforderlich ist. Wird die $LT_{100}$ nach 6 Stunden nicht erreicht, wird der Prozent der knock down gegangenen Testtiere festgestellt.

Konzentrationen der Wirkstoffe, Synergisten und Gemische und ihre Wirkungen gehen aus der nachfolgenden Tabelle hervor.

## IV. Testergebnisse

$LT_{100}$ Test mit gegen Phosphorsäureester resistenten weiblichen Musca domestica (Stamm Weymanns)

| Wirkstoffe/ Synergisten | Konzentrationen in % Wirkstoff / Synergist | LT-100 in Minuten oder bei 360' in % |
|---|---|---|
| A) | 1,0 | 360' = 0 % |
| B) | 1,0 | 360' = 0 % |
| C) | 1,0 | 360' = 0 % |
| D) | 0,04 | 360' = 0 % |
| E) | 0,04 | 360' = 0 % |
| F) | 0,008 | 360' = 60 % |
| G) | 0,04 | 180' |
| H) | 0,0016 | 60' |
| I) | 0,04 | 45' |
| J) | 1,0 | 360' = 70 % |
| K) | 0,008 | 360' |
| L) | 0,008 | 360' = 95 % |
| M) | 0,04 | 60' |
| 1) | 1,0 | 360' = 0 % |
| 2) | 1,0 | 360' = 0 % |
| 3) | 1,0 | 360' = 0 % |
| 4) | 1,0 | 360' = 0 % |
| 5) | 1,0 | 360' = 0 % |
| 6) | 1,0 | 360' = 0 % |
| 7) | 1,0 | 360' = 0 % |
| 8) | 1,0 | 360' = 0 % |
| 9) (bekannt) | 1,0 | 360' = 0 % |

| Wirkstoff/Synergist | | | Konzentrationen in % Wirkstoff / Synergist | | | LT 100 in Minuten od. bei 360' in % |
|---|---|---|---|---|---|---|
| A | + | 2 | 0,2 | + | 0,2 | 240' |
| A | + | 4 | 0,2 | + | 0,2 | 150' |
| A | + | 5 | 0,2 | + | 0,2 | 150' |
| A | + | 6 | 0,04 | + | 0,04 | 120' |
| A | + | 7 | 0,04 | + | 0,04 | 180' |
| A | + | 8 | 0,04 | + | 0,04 | 180' |
| A | + | 9 | 0,2 | + | 0,2 | 360' = 95 % |
| B | + | 2 | 0,04 | + | 0,04 | 150' |
| B | + | 4 | 1,0 | + | 1,0 | 150' |
| B | + | 5 | 1,0 | + | 1,0 | 210' |
| B | + | 6 | 0,04 | + | 0,04 | 90' |
| B | + | 7 | 0,04 | + | 0,04 | 90' |
| B | + | 9 | 0,04 | + | 0,04 | 360' = 75 % |
| C | + | 5 | 1,0 | + | 1,0 | 360' |
| C | + | 6 | 0,04 | + | 0,04 | 180' |
| C | + | 7 | 0,04 | + | 0,04 | 210' |
| C | + | 9 | 0,04 | + | 0,04 | 360' = 10 % |
| D | + | 2 | 0,04 | + | 0,04 | 210' |
| D | + | 4 | 0,04 | + | 0,04 | 240' |
| D | + | 6 | 0,04 | + | 0,04 | 180' |
| D | + | 7 | 0,04 | + | 0,04 | 180' |
| D | + | 9 | 0,04 | + | 0,04 | 360' = 60 % |
| E | + | 7 | 0,04 | + | 0,04 | 180' |
| E | + | 6 | 0,04 | + | 0,04 | 180' |
| F | + | 2 | 0,008 | + | 0,008 | 180' |
| F | + | 3 | 0,008 | + | 0,008 | 150' |
| F | + | 6 | 0,008 | + | 0,008 | 120' |
| F | + | 7 | 0,008 | + | 0,008 | 180' |
| F | + | 9 | 0,008 | + | 0,008 | 360' = 10 % |
| G | + | 1 | 0,04 | + | 0,04 | 90' |
| G | + | 2 | 0,04 | + | 0,04 | 105' |
| G | + | 3 | 0,04 | + | 0,04 | 150' |
| G | + | 4 | 0,04 | + | 0,04 | 90' |
| G | + | 5 | 0,04 | + | 0,04 | 120' |
| G | + | 6 | 0,04 | + | 0,04 | 105' |
| G | + | 7 | 0,04 | + | 0,04 | 90' |

| Wirkstoff/Synergist | | | Konzentrationen in % Wirkstoff / Synergist | | | LT 100 in Minuten bei 360' in % |
|---|---|---|---|---|---|---|
| H | + | 2 | 0,0016 | + | 0,0016 | 45' |
| H | + | 3 | 0,0016 | + | 0,0016 | 45' |
| H | + | 6 | 0,0016 | + | 0,0016 | 45' |
| H | + | 7 | 0,0016 | + | 0,0016 | 45' |
| I | + | 3 | 0,04 | + | 0,04 | 30' |
| I | + | 6 | 0,04 | + | 0,04 | 30' |
| I | + | 7 | 0,04 | + | 0,04 | 30' |
| J | + | 1 | 0,2 | + | 0,2 | 240' |
| J | + | 2 | 0,2 | + | 0,2 | 240' |
| J | + | 5 | 0,2 | + | 0,2 | 180' |
| J | + | 7 | 0,2 | + | 0,2 | 210' |
| J | + | 9 | 0,2 | + | 0,2 | 360' = 95 % |
| K | + | 1 | 0,008 | + | 0,008 | 150' |
| K | + | 2 | 0,008 | + | 0,008 | 120' |
| K | + | 3 | 0,008 | + | 0,008 | 150' |
| K | + | 4 | 0,008 | + | 0,008 | 210' |
| K | + | 5 | 0,008 | + | 0,008 | 120' |
| K | + | 6 | 0,008 | + | 0,008 | 120' |
| K | + | 7 | 0,008 | + | 0,008 | 150' |
| K | + | 9 | 0,008 | + | 0,008 | 180' |
| L | + | 1 | 0,008 | + | 0,008 | 180' |
| L | + | 4 | 0,008 | + | 0,008 | 210' |
| L | + | 7 | 0,008 | + | 0,008 | 105' |
| L | + | 9 | 0,008 | + | 0,008 | 360' = 85 % |
| M | + | 3 | 0,04 | + | 0,04 | 45' |
| M | + | 6 | 0,008 | + | 0,008 | 45' |
| M | + | 7 | 0,04 | + | 0,04 | 45' |

Die Herstellung der Verbindungen der Formel (I) sei anhand der folgenden Herstellungsbeispiele erläutert:

Beispiel 1:

Verfahrensvariante (a)

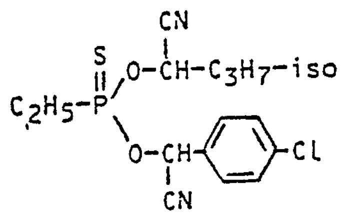

14,1 g (0,1 Mol) 4-Chlorbenzaldehyd, 22,6 g (0,1 Mol) O-(1-Cyano-2-methyl-propyl)-ethyl-thiophosphonsäureesterchlorid, 0,6 g Tetrabutylammoniumbromid und 5,6 g (0,12 Mol) Natriumcyanid werden in 300 ml Toluol vorgelegt und bei einer Innentemperatur zwischen 0 und 10°C 10 ml Wasser unter starkem Rühren zugetropft. Nach beendeter Zugabe wird die Temperatur langsam auf 20°C erhöht und bis zum Reaktionsende weiter gerührt. Anschließend wird die wäßrige Phase abgetrennt, die organische Phase zweimal mit je 100 ml Wasser gewaschen und über Natriumsulfat getrocknet. Nach Abziehen des Lösungsmittels im Wasserstrahlvakuum und abdestillieren schwerer flüchtiger Bestandteile bei 50°C/3 mm Hg erhält man als öligen Rückstand 31 g (86,9 % der Theorie) O-(1-Cyano-1-(4-chlorphenyl)-methyl)-O-(1-cyano-2-methyl-propyl)-ethyl-thiophosphonsäurediester mit einem Brechungsindex $n_D^{20}$ : 1,5357.

Beispiel 2

Verfahrensvariante (b)

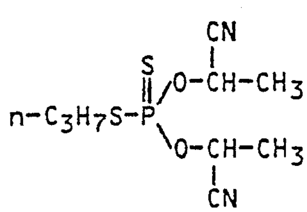

(Synergist Nr. 3)

20,9 g (0,1 Mol) S-n-Propyl-dithiophosphorsäuredichlorid, 13,2 g (0,3 Mol) Acetaldehyd, 11,2 g (0,23 Mol) Natriumcyanid und 1 g Tetrabutylammoniumbromid werden in 200 ml Hexan vorgelegt und bei einer Innentemperatur zwischen 0 und 5°C 20 ml Wasser unter starkem Rühren zugetropft. Nach beendeter Zugage wird die Temperatur langsam auf 20°C erhöht und bis zum Reaktionsende weiter gerührt. Nach Abtrennen der oganischen Phase wird der Rückstand mit 2 mal 200 ml Methylenchlorid extrahiert,die vereinigten organischen Phasen 2 mal mit 100 ml Wasser gewaschen und über Natriumsulfat getrocknet. Nach Abziehen des Lösungsmittels im Wasserstrahlvakuum und Abdestillieren schwerer flüchtiger Bestandteile bei 50°C/3 mm Hg erhält man als öligen Rückstand 19,4 g (70 % der Theorie) Bis-0,0-(1-Cyanoethyl)-S-n-propyl-dithiophosphorsäureester mit einem Brechungsindex $n_D^{20}$ : 1,5013.

Beispiel 3:

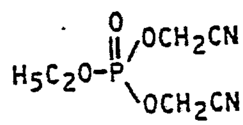

Verfahrensvariante (c)

Zu einer Lösung von 22,8 g (0,4 Mol) Hydroxyacetonitril in 200 ml Ether/Tetrahydrofuran (1:1) werden bei -78°C 64 g (0,2 Mol) einer 15 %-igen Lösung von Butyllithium in Hexan getropft. Dieses Gemisch wird anschließend bei -50°C zu einer Lösung von 16,3 g (0,1 Mol) Phosphorsäure-O-ethylesterdichlorid in 50 ml Tetrahydrofuran getropft. Nach beendeter Zugabe wird auf 20°C erwärmt und 12 Stunden bei dieser Temperatur weitergerührt. Nach Enfernen des Lösungsmittels im Wasserstrahlvakuum wird

in Methylenchlorid aufgenommen, mit Wasser gewaschen und die organische Phase über Natriumsulfat getrocknet. Man erhält nach Destillieren 3,8 g (20 % der Theorie) Bis-O,O-(Cyano-methyl)-O-ethyl-phosphorsäureester vom Siedepunkt 146°C/0,5 mm Hg und Brechungsindex $n_D^{20}$ : 1,4325.

Analog Verfahrensvariante (a) bzw. (b) oder (c) können die in der nachstehenden Tabelle aufgeführten Verbindungen der Formel (I) hergestellt werden:

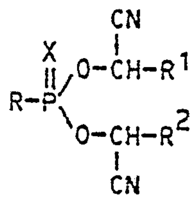

(I)

Tabelle 2

| Beisp. Nr. | X | R | $R^1$ | $R^2$ | Physikalische Daten Brechungsindex $n_D^{20}$ | Synergist Nr. |
|---|---|---|---|---|---|---|
| 4 | S | $-OC_2H_5$ | $-CH_3$ | $-CH_3$ | 1,4702 | 2) |
| 5 | S | $-CH_3$ | $-CH_3$ | $-CH_3$ | 1,4770 | 6) |
| 6 | S | $-C_2H_5$ | $-CH_3$ | 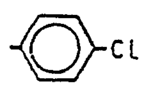 | 1,5262 | 8) |
| 7 | S | $-OC_2H_5$ | 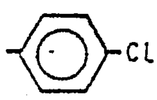 | $-CH_3$ | 1,4280 | |
| 8 | S | 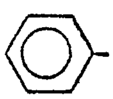 | $-C_3H_7i$ | $-CH_3$ | 1,5190 | |
| 9 | S | $-OC_2H_5$ | H | H | 1,4863 | 1) |
| 10 | S | $-CH_3$ | H | H | 1,5100 | 4) |
| 11 | S | $-C_2H_5$ | H | H | 1,4993 | 5) |
| 12 | S | $-C_2H_5$ | $-CH_3$ | $-CH_3$ | 1,4783 | 7) |
| 13 | O | $-C_2H_5$ | H | H | 1,4500 | |

Die Herstellung von Verbindungen der Formel (II) sei anhand des folgenden Beispiels erläutert:

Beispiel zur Herstellung der Verbindungen der Formel (II):

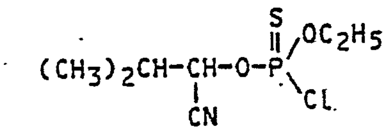

233 g (1,3 Mol) O-Ethyl-thiophosphorsäureesterdichlorid 72 g (1,0 Mol) Isobutyraldehyd und 6 g Tetrabutylammoniumbromid werden in 1 l Hexan vorgelegt und bei einer Innentemperatur zwischen 0°C und 5°C eine Lösung von 56 g (1,1 Mol) Natriumcyanid in 100 ml Wasser unter starkem Rühren zugetropft. Nach beendeter Zugabe wird die Temperatur langsam auf 20°C erhöht und das Gemisch wird noch 12 Stunden gerührt. Anschließend wird die wäßrige Phase abgetrennt, die organische Phase mit 100 ml Wasser gewaschen und mit Natriumsulfat getrocknet. Nach Abziehen des Lösungsmittels im Wasserstrahlvakuum und Abdestillieren des überschüssigen Ausgangsmaterials erhält man 173 g (71 % der Theorie) O-Ethyl-O-(1-cyano-2-methyl-propyl)-thio-phosphorsäurediesterchlorid als öligen Rückstand vom Brechungsindex $n_D^{20}$ : 1,4806.

Analog diesem Beispiel können auch die übrigen Verbindungen der Formel (II) hergestellt werden.

Patentansprüche:

1. (Thiono)(Dithio)-Phosphor-(phosphon)-säuredicyanhydrinester der Formel I

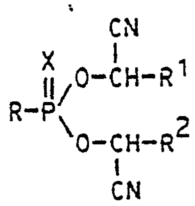

(I)

in welcher

X für Sauerstoff oder Schwefel steht,

R für einen gegebenenfalls substituierten Rest aus der Reihe Alkyl, Alkenyl, Alkinyl, Aryl, Aralkyl, Alkoxy, Aryloxy, Aralkoxy, Alkylthio, Arylthio, Aralkylthio, Alkylamino (Mono- und Dialkylamino), Arylamino oder Aralkylamino steht und

$R^1$ und $R^2$ gleich oder verschieden sind und einzeln für Wasserstoff oder für gegebenenfalls substituierte Reste aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest stehen.

2. Verbindungen gemäß Anspruch 1, in welchen

X für Sauerstoff oder Schwefel steht,

R für einen gegebenenfalls durch Halogen substituierten Rest aus der Reihe $C_1$-$C_5$-Alkyl, $C_2$-$C_5$-Alkenyl, $C_2$-$C_5$-Alkinyl, Phenyl, Benzyl, $C_1$-$C_5$-Alkoxy, Phenoxy, Benzyloxy, $C_1$-$C_5$-Alkylthio, Phenylthio, Benzylthio, $C_1$-$C_5$-Alkylamino, (Mono- und Dialkylamino), Phenylamino oder Benzylamino steht und

$R^1$ und $R^2$ gleich oder verschieden sind und einzeln für Wasserstoff oder für einen gegebenenfalls durch Halogen, Cyano, $C_1$-$C_4$-Alkoxy oder $C_1$-$C_4$-Alkylthio substituierten Alkylrest mit 1 bis 20 Kohlenstoffatomen, für gegebenenfalls durch Halogen substituiertes $C_2$-$C_5$-Alkenyl oder $C_2$-$C_5$-Alkinyl, für gegebenenfalls durch $C_1$-$C_4$-Alkyl, $C_1$-$C_4$-Alkoxycarbonyl, Phenoxybenzyloxycarbonyl und/oder Halogen substituiertes $C_3$-$C_8$-Cycloalkyl, für gegebenenfalls durch Halogen, $C_1$-$C_4$-Alkyl oder $C_1$-$C_4$-Alkoxy substituiertes Phenyl-$C_1$-$C_4$-alkyl, für gegebenenfalls durch Halogen, Cyano, Nitro, $C_1$-$C_4$-Alkyl, $C_1$-$C_4$-Alkoxy, $C_1$-$C_4$-Alkylthio, Trifluormethyl und/oder durch gegebenenfalls halogen-substituiertes $C_1$-$C_2$-Alkylendioxy substituiertes Phenyl, für Furyl, Thienyl oder Pyridyl stehen.

3. Verbindungen gemäß Anspruch 1, in welchen

X für Sauerstoff oder Schwefel steht,

R für einen gegebenenfalls durch Fluor oder Chlor substituierten Rest aus der Reihe $C_1$-$C_5$-Alkyl, Phenyl, $C_1$-$C_5$-Alkoxy, Phenoxy, Benzyloxy, $C_1$-$C_5$-Alkylthio, Phenylthio, Benzylthio und $C_1$-$C_5$-Alkylamino (Mono- und Dialkylamino ) steht und

$R^1$ und $R^2$ gleich oder verschieden sind und einzeln für Wasserstoff oder für einen gegebenenfalls durch Fluor, Chlor, Methoxy oder Methylthio substituierten Alkylrest mit 1 bis 10 Kohlenstoffatomen, für $C_2$-$C_5$-Alkenyl, $C_3$-$C_6$-Cycloalkyl, für gegebenenfalls durch Chlor substituiertes Phenyl-$C_1$-$C_2$-alkyl, für gegebenenfalls durch Fluor, Chlor, Cyano, Nitro, Methyl, Methoxy, Trifluormethyl und/oder Methylendioxy substituiertes Phenyl, für Thienyl oder für Pyridyl stehen.

4. Verfahren zur Herstellung von (Thiono)(Dithio)-Phosphor-(phosphon)-säuredicyanhydrinestern der Formel I

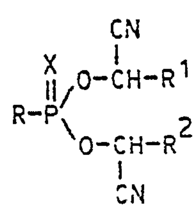

(I)

in welcher

X für Sauerstoff oder Schwefel steht,

R für einen gegebenenfalls substituierten Rest aus der Reihe Alkyl, Alkenyl, Alkinyl, Aryl, Aralkyl, Alkoxy, Aryloxy, Aralkoxy, Alkylthio, Arylthio, Aralkylthio, Alkylamino (Mono- und Dialkylamino), Arylamino oder Aralkylamino steht und

$R^1$ und $R^2$ gleich oder verschieden sind und einzeln für Wasserstoff oder für gegebenenfalls substituierte Reste aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest stehen,

dadurch gekennzeichnet, daß man

a) (Thiono)(Dithio)-Phosphor-(phosphon)-säurecyanhydrinesterchloride der Formel II

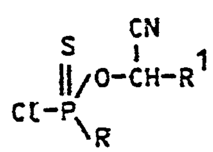

(II)

in welcher

R und $R^1$ die oben angegebene Bedeutung haben,

mit Aldehyden der Formel III

$$R^2\text{-CHO} \qquad \text{(III)}$$

in welcher

$R^2$ die oben angegebene Bedeutung hat,

in Gegenwart angenähert äquimolarer Mengen wasserlöslicher Cyanide, in Gegenwart eines Katalysators, in Gegenwart von Wasser und mit Wasser praktisch nicht mischbarer Verdünnungsmittel bei Temperaturen zwischen etwa 0 und 80°C umsetzt oder

b) Thio-Phosphor-(phosphon)-säuredichloride der Formel IV

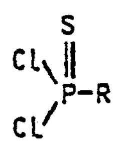

(IV)

in welcher

R die oben angegebene Bedeutung hat,

entweder mit Aldehyden der Formel V

$$R^1\text{CHO} \qquad \text{(V)}$$

in welcher

$R^1$ die oben angegebene Bedeutung hat,

oder mit Aldehyden der Formel III

$$R^2CHO \qquad (III)$$

in welcher

$R^2$ die oben angegebene Bedeutung hat,

in Gegenwart von wasserlöslichen Cyaniden, in Gegenwart eines Katalysators, in Gegenwart von Wasser und mit Wasser praktisch nicht mischbarer Lösungsmittel bei Temperaturen zwischen etwa 0 und 80°C umsetzt oder

c) Phosphon-(phosphor)-säuredichloride der Formel VI

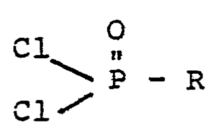

(VI)

in welcher

R die oben angegebene Bedeutung hat,

mit substituierten Acetonitrilen der Formel VII

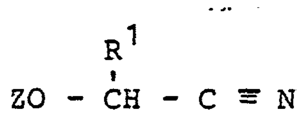

(VII)

in welcher

$R^1$ die oben angegebene Bedeutung hat, und

Z für Wasserstoff oder ein Alkalimetallion steht,

- oder mit substituierten Acetonitrilen der Formel VIII

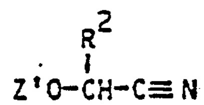

(VIII)

in welcher

$R^2$ die oben angegebene Bedeutung hat, und

Z' für Wasserstoff oder ein Alkalimetallion steht,

gegebenenfalls in Gegenwart von Säureakzeptoren, gegebenenfalls in Gegenwart von Verdünnungsmitteln bei Temperaturen zwischen -80°C und +80°C umsetzt.

5. Schädlingsbekämpfungsmittel, gekennzeichnet durch einen Gehalt an mindestens einer Verbindung der Formel I gemäß Anspruch 1.

6. Schädlingsbekämpfungsmittel enthaltend wenigstens einen Synergisten und wenigstens einen gegen Arthropoden wirksamen anderen Stoff, gekennzeichnet durch einen Gehalt an mindestens einer Verbindung der Formel I, gemäß Anspruch 1.

7. Verwendung von Verbindungen der Formel I gemäß Anspruch 1 als Synergisten bei der Bekämpfung von Schädlingen, insbesondere Insekten und Spinnentieren.

8. Verfahren zur Bekämpfung von Schädlingen, dadurch gekennzeichnet, daß man Verbindungen der Formel I gemäß Anspruch 1 und andere Wirkstoffe, welche gegen Arthropoden wirksam sind, auf die Schädlinge, vorzugsweise Insekten oder Spinnentiere oder ihren Lebensraum einwirken läßt.

9. Verfahren zur Herstellung von Schädlingsbekämpfungsmitteln dadurch gekennzeichnet, daß man Verbindungen der Formel I gemäß Anspruch 1 mit anderen Wirkstoffen, welche gegen Arthropoden wirksam sind und mit Streckmitteln und/oder oberflächenaktiven Mitteln vermischt.